Europäisches Patentamt

European Patent Office

Office européen des brevets

(11) Publication number: **0 289 328**
**A1**

(12) **EUROPEAN PATENT APPLICATION**

(21) Application number: 88303879.6

(22) Date of filing: 28.04.88

(51) Int. Cl.⁴: **A 01 K 1/064**

(30) Priority: 01.05.87 GB 8710463
28.08.87 GB 8720436

(43) Date of publication of application:
02.11.88 Bulletin 88/44

(84) Designated Contracting States:
AT BE CH DE ES FR GB GR IT LI LU NL SE

(71) Applicant: **M.J. AINGE & COMPANY LIMITED**
**Bryan House 158 Bromyard Road**
**Worcester ER2 5EF (GB)**

(72) Inventor: **Brown, Gerald**
**11 Highover Way**
**Hitchin, Hertfordshire SG4 0RF (GB)**

(74) Representative: **Leach, John Nigel et al**
**FORRESTER & BOEHMERT Widenmayerstrasse 4/I**
**D-8000 München 22 (DE)**

(54) Animal tether.

(57) An animal tether (1) which is adapted to be attached at one end to a fixture (4) and at the other end to part of a collar or harness secured to the animal (2), the tether including a safety device (10) comprising a body part (11) having a male portion (14,15) with a head formation (15) and a second body part (12) having a female portion (24) comprising an aperture into which the head formation (15) of the male portion (14,15) is, in use. received, the second body part (12) including three spring biased detant members (25) which are each urged towards and into engagement with the male portion (11) behind the head formation (15) by springs (29) of the coil type, the force of at least one of the springs (29) being adjustable by means of a respective screw threaded adjustment member (28) on which the spring (29) bears so that upon the animal moving violently, so as to apply an excessive force to the tether, the two body parts (11,12) separate so that the animal is released rather than being restrained and hence possibly injured.

FIG 1

EP 0 289 328 A1

## Description

### Animal Tether

Description of Invention

This invention relates to an animal tether particularly, but not exclusively, suitable for tethering horses and ponies.

It is customary to tether horses and ponies for instance while they are being transported in horse boxes and when they need to be restrained in fields or paddocks. This is commonly done either by using their riding reins or leading reins attached to a harness on the animal, the free part of the reins being secured directly to a fixture, or by means of string or twine attached to a fixture which is secured to the harness on the horse or pony.

It will be appreciated that both the reins themselves and string or twine are very strong and there is a risk that a horse or other animal tethered as described, which may become frightened or may move violently for some other reason, may suffer injury.

According to one aspect of the invention we provide an animal tether which is adapted to be attached at one end to a fixture and at the other end to a part of a collar or harness secured to the animal, the tether including a safety device comprising a first body part having a male portion comprising a head formation and a second body part having a female portion comprising an aperture into which the head formation of the male portion is, in use, received, the second body part including three spring biased detant members which are each urged towards and into engagement with the male portion behind the head formation by springs of the coil type, the force of at least one of the springs being adjustable by means of a respective screw threaded adjustment member on which the spring bears.

Thus the invention provides a tether having a safety device in which the male and female portions remain engaged when normal forces are applied, such as occurs when the animal moves about in a calm way, but which separates when an excessive force is applied to the tether so that the animal is released rather than being restrained and hence possibly injured.

According to a second aspect of the invention we provide a safety device for an animal tether according to the first aspect of the invention.

The invention will now be described with the aid of the accompanying drawings in which:

FIGURE 1 shows a tether in accordance with the invention.

FIGURE 2 shows the two interengaged parts of a safety device of the tether of Figure 1 in diagrammatic sectional view.

FIGURE 3 shows a cross section taken on the line II-II of Figure 2.

FIGURE 4 shows a diagrammatic perspective view of the safety device of Figures 1 and 2 in a disengaged condition but the two disengaged parts being connected by a link, and,

FIGURE 5 shows diagrammatically in cross section the link of Figure 4 to an enlarged scale.

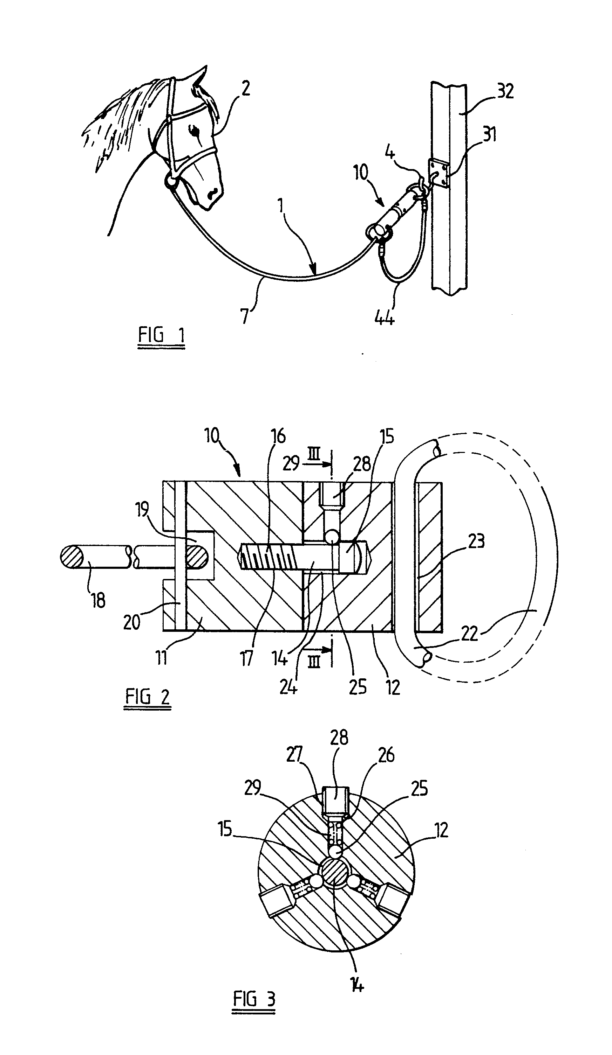

Referring to Figure 1, a tether 1 for tethering an animal, in this example horse or pony 2, is attached at one end 3 to a fixture 4, such as a hook, and at the other end 5 to a harness 6 on the animal 2.

The tether 1 includes a safety device 10 which in this example is disposed between a first tether part 7 which is the leading or riding rein of the horse, and a fixture 4, but in an alternative arrangement, the safety device 10 may be disposed between two tether parts one of which is secured to the animal 2 and the other of which is secured to a fixture 4. In a still further arrangement, the safety device 10 may be disposed between the animal 2 and a tether part which is attached to the fixture 4.

Referring to Figure 2, the safety device is shown in more detail. The device 10 comprises two interengageable body parts 11 and 12, each part being made of a suitable metal or plastics material such as brass, aluminium, polyester or "Nylon" (Registered Trade Mark), and can conveniently be in the form of a short round rod which by way of example may be 25 mm in length and also in diameter.

The part 11 shown on the left in Figure 2 has projecting from one end a male portion in the form of a round rod or shank 14 which has an enlarged head formation 15 provided thereupon which is also round. The shank 14 and head 15 are made in one piece and may be made integrally with the body part 11. However, in order to allow the device 10 to be repaired once the head 15 and/or the shank 14 are worn, head 15 and shank 14 are conveniently made as a single replaceable component as shown. For example the end 16 of the shank 14 distant from the head 15 may be screw threaded and fitted into a corresponding tapped and threaded hole 17 in the part 11.

At the opposite end from the male portion 14,15, the body part 11 is provided with means for attaching a device to the riding rein or leading rein 7 or other tether part secured to the harness 6. This attachment means is, in this example, in the form of a large ring 18 which is freely pivotally attached to the body part 11. In one example, as shown at the left hand side in Figure 2, a portion of the ring 18 which is made straight is held in a wide groove 19 in the body part 11 by means of a brass or other pin 20 lodged in a hole drilled through the body part 11 across the groove 19. An alternative arrangement for fixing the ring 18 is shown on the right hand side of Figure 2 whereby a similar attachment means comprising a ring 22 is attached to the part 12 by passing through a large transverse hole 23 provided in the body part 12.

The body part 12 includes a female portion in the form of an aperture comprising a round bore 24 of a size and length to receive the shank 14 and its head 15. As shown in Figure 2 and also in Figure 3, three detant members are spaced equally around a centre axis A of the safety device, each detant member being in the form of a ball catch 25. The ball catches 25 are provided in passageways 26 and extend into the bore 24. The ball catches 25 are located along axis A so as to lodge behind the head formation 15 when the two body parts 11,12, are fully engaged as shown in Figure 2.

Each ball catch 25 in its respective passageway 26 is spaced at 120° from the others around the axis A of the device and it will be appreciated that the two parts 11,12, can relatively rotate. The ball catches 25 are located at the inner ends of the radial passageways 26 formed in the part 12. The outer parts 28 of the passageways 26 are internally screw threaded and receive correspondingly screw threaded adjustment members comprising grub screws 28, a coil spring 29 being lodged in each passageway 26 between the respective screw 28 and the ball of the ball catch 25.

The compression applied to the springs 29 and hence the force required to separate the three ball catches 25 sufficiently to allow the head 15 to pass between them, can therefore be adjusted by tightening or loosening each screw 18 in its respective passageway 26 as required.

In use the two parts 11,12, of the safety device 10 are interengaged and the screws 28 are adjusted so that the parts 11,12, may be moved apart when a given force is exceeded in order to cause the two parts 11,12, of the device 10 to separate. This force may be selected to that an animal tethered by the tether 1 will not normally exert a sufficient pull to separate the two parts 11,12 but a force sufficient for this to occur would only arise if the animal were to become violent or frightened, causing it to rear or otherwise move sharply in a manner such that a conventional tether could cause it injury.

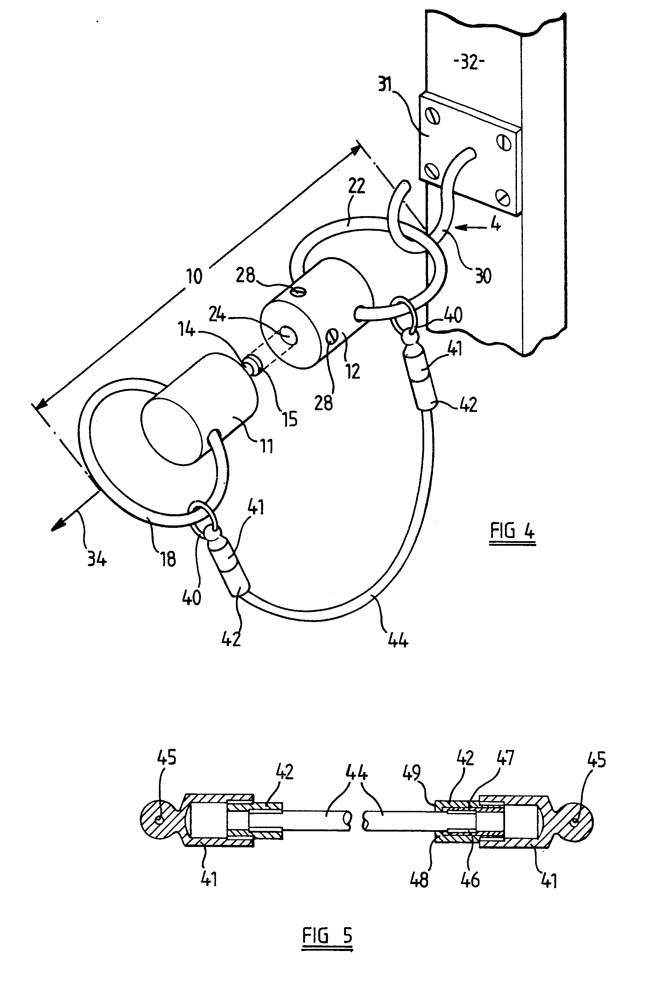

As shown in Figures 1 and 4, the ring 22 of the device 10 is attached to a fixture 4 comprising a hook 30 fixed by a base plate 31 to a post 32 such as a stanchion in a horse box. The ring 18 of the body part 11 is fixed to the animal for instance by means of tether part 7 which may be a riding or leading rein. If the horse 2 or other animal moves, it will pull on the device 10 by applying tension in the direction of arrow 34.

Where a safety device 10 has been used to allow a heavy horse to be safely tethered with the screws 28 being suitably adjusted to achieve the appropriate given force before the two parts 11,12, separate, the device 10 can be easily adjusted for a lighter horse or pony for instance which cannot exert such a strong pull and would need to overcome a less minimum force in order to overcome the risk of injury.

Referring to figure 3, it can be seen that the uppermost screw 28 has been loosened so that it slightly projects from the body part 12 and hence the force on the associated ball catch 25 is reduced; the right hand screw has been fully tightened so as to provide a maximum force on the appropriate ball catch 25 which thus exerts maximum pressure on the headed shank 14,15, of the male portion of body part 11; the left hand screw 28 is adjusted to an intermediate position.

By providing three such screws 28 in the equi-distant arrangement shown, a self centering effect is achieved. In practice, it is usually best to adjust each screw 28 to about the same position along its passageway 26 in selecting the particular force in the available range at which the body parts 10,11, of the safety device 10 will separate.

Referring now particularly to figures 4 and 5, a subsidiary link or connector member shown at 44 interconnects the two parts 11,12, of the device 10. In accordance with a preferred feature of the present invention the subsidiary link 44 interconnects the rings 18,22, although it can also be attached and so interconnect the parts 11,12, in other ways. In each case however, the length of the link 44 is preferably longer than the distance between the points of attachment of the link 44 to the safety device 10. Thus when a force is applied to the safety device 10 in the direction of arrow 34, no force is transmitted to the link 44, at least while the body parts 11,12, remain engaged.

In the present example, each of the attachment rings 18,22, has connected to it a small ring 14 which passes through an aperture 45 in a head member 41 of the link 44, the head member 41 itself being attached to an end or ferrule member 42.

As shown at the left hand side of figure 5, the link 44, which is made of any suitable flexible material such as round section plastic filament or a plastics tube surrounding a core of for example string or other flexible material, has a ferrule member 42 attached to each of its ends. These members 42 can take the form of a small metal tube attached to the end of the link 44, for instance by being crimped into place.

The free end of the ferrule member 42 carries an external screw thread which is receivable in a corresponding internal screw thread inside the end of the tubular head member 41. In order to attach the link 44 to the safety device 10, the ring 40 connected to one end of the head members 41, is threaded over the ring 18 and the ferrule member 42 on one end of the link 44 is then attached by being screwed into the end of the head member 41.

The other end of the link 44 is then similarly attached by having its ferrule member 42 screwed into its respective head member 41 after its ring 40 has been connected to the ring 22 on the body part of the safety device 10.

This embodiment of the link 44 works satisfactorily and ensures that in normal use the two body parts 11,12, of the device 10 will remain connected to one another even when the body parts 11,12, become separated as hereinbefore described.

Furthermore, if the two body parts 11,12, do become separated, and a sufficient force is then applied to the link 44, by virtue of the material from which the link 44 is made, this will break allowing the animal to free itself entirely without causing severe injury.

Since each ferrule member 42 at one end of the link 44 has to be screwed into its associated head member 41, this can cause difficulty in connecting the link 44 to the rings 18,22.

An improved version which avoids any difficulty is shown at the right hand of figure 5 wherein the ferrule member 42 is loosely rotatable relative to the remainder of the link 44. To achieve this, a metal member 46 is crimped or otherwise secured to the material of the link 44 as shown at 47, and the ferrule member 42 has an apertured end wall 49 through which the link 44 extends. The free end of the ferrule member 42 is externally screw threaded which allows it to become detachably secured to the head member 41.

The features disclosed in the foregoing description, in the following claims, or the accompanying drawings, expressed in their specific forms or in terms of a means for performing the disclosed function, or a method or process for attaining the disclosed result, or a class or group of substances or compositions, as appropriate, may, separately, or in any comination of such features, be utilised for realising the invention in diverse forms thereof.

## Claims

1. An animal tether which is adapted to be attached at one end to a fixture and at the other end to part of a collar or harness secured to an animal, the tether including a safety device (10) comprising a first body part (11) having a male portion (14,15) comprising a head formation (15) and a second body part (12) having a female portion (24) comprising an aperture into which the head formation (15) of the male portion (14,15) is, in use, received, the second body part (12) including three spring biased detant members (25) which are each urged towards and into engagement with the male portion (11) behind the head formation (15) by springs (29) of the coil type, the force of at least one of the springs (29) being adjustable by means of a respective screw threaded adjustment member (28) on which the spring (29) bears.

2. An animal tether according to claim 1 characterised in that the first male portion (11) comprises a shank (14) on which the head formation (15) is provided.

3. An animal tether according to Claim 1 or Claim 2 characterised in that the first body part (11) has an attachment means comprising a ring (18).

4. An animal tether according to any one of Claims 1 to 3 characterised in that the spring biased detant members (25) are each received in a respective passageway (26) which is inclined to the aperture (24) in which the head formation (15) is received, the passageways (26) each being generally equal angularly spaced about a longitudinal axis (A) of the aperture (24).

5. An animal tether according to Claim 4 characterised in that the passageways (26) are each inclined generally at right angles to the axis (A).

6. An animal tether according to any one of Claims 1 to 5 characterised in that the detant members (25) each comprise a ball.

7. An animal tether according to any one of the preceding claims characterised in that the second body part (12) has an attachment means comprising a ring (22).

8. An animal tether according to any one of the preceding claims characterised in that a link is provided between the first body part (11) and the second body part (12), the link providing a connection between the first and second body parts (11,12) of the safety device (10) when the male and female portions (15,24) are disengaged.

9. An animal tether according to Claim 8 characterised in that the link is longer than the distance from its point of attachment to the first body part (11) to its point of attachment to the second body part (12).

10. A safety device for a animal tether according to any one of the preceding claims.

0289328

FIG 1

FIG 2

FIG 3

0289328

FIG 4

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 231 327 (MADER)<br>--- | | A 01 K  1/064 |
| Y | CH-A- 183 930 (VONTOBEL)<br>* Whole document * | 1 | |
| A | | 2,4-6 | |
| | --- | | |
| Y | GB-A- 844 655 (MORTON & CROWDER)<br>* Figures 1,2; page 1, lines 43-71;<br>page 2, lines 10-23 * | 1 | |
| A | ----- | 2-7 | |

TECHNICAL FIELDS SEARCHED (Int. Cl.4)

A 01 K

The present search report has been drawn up for all claims

| Place of search | Date of completion of the search | Examiner |
|---|---|---|
| THE HAGUE | 02-08-1988 | VILBIG K |